# EUROPÄISCHE PATENTSCHRIFT

(11) **EP 1 567 017 B1**
(45) Veröffentlichungstag und Bekanntmachung des Hinweises auf die Patenterteilung: **12.09.2007**
(21) Anmeldenummer: 03773324.3
(22) Anmeldetag: 14.11.2003
(51) Int. Cl.: A23C 11/10

(54) **VERFAHREN ZUR HERSTELLUNG VON HANFMILCH**
METHOD FOR PRODUCING HEMP MILK
PROCEDE POUR PRODUIRE DU LAIT DE CHANVRE

(30) Priorität: 14.11.2002 AT 17202002
(43) Veröffentlichungstag der Anmeldung: 31.08.2005
(73) Patentinhaber: Atb & G, Frenkenberger Consulting-Trading Gmbh, 5300 Hallwang (AT)
(72) Erfinder: BERGHOFER, Emmerich, A-3021 Pressbaum (AT); PÖLLMANN, Klaus, A-4070 Eferding (AT); TRABY, Martina, A-1050 Wien (AT); FRENKENBERGER, Christian, A-5300 Hallwang (AT)
(74) Vertreter: Wildhack, Helmut
(86) Internationale Anmeldenummer: PCT/AT2003/000343
(87) Internationale Veröffentlichungsnummer: WO 2004/043157

(56) Entgegenhaltungen:
- DE-C- 19 833 567
- DATABASE WPI Section Ch, Week 200263 Derwent Publications Ltd., London, GB; Class D13, AN 2002-588412 XP002270571 & RU 2 185 069 C (SAMOFALOVA L A), 20. Juli 2002 (2002-07-20) in der Anmeldung erwähnt
- P.M. LLOYD: "Recipe of the Month: Hempstar Milk " THE VEGAN NEWS, [Online] 1999, XP002270570 Gefunden im Internet: <URL:http://www.btinternet.com/~bury_rd/fe bnine.htm> [gefunden am 2004-02-16]
- DATABASE WPI Section Ch, Week 200315 Derwent Publications Ltd., London, GB; Class B04, AN 2003-149545 XP002270572 & CN 1 161 810 A (WANG Z), 15. Oktober 1997 (1997-10-15)

## Beschreibung

Die vorliegende Erfindung betrifft ein neues und kostengünstiges Verfahren zur Herstellung von organoleptisch hochwertiger Hanfmilch mit hoher Nahrungsmittelqualität.

In den letzten Jahren besteht ein kontinuierlich steigendes Interesse einer wachsenden Gruppe von Konsumenten an gesundheitsfördernden und dabei gleichzeitig einen anspruchsvollen Geschmack befriedigenden Alternativ-Lebensmittelprodukten auf pflanzlicher Basis.

Daneben besteht eine weitere, infolge des rapiden Ansteigens von Allergie-Erkrankungen der verschiedensten Art ebenfalls rasch wachsende Gruppe von Personen, welche zur Vermeidung unangenehmer Allergien vom Konsum tierischer Produkte, insbesondere Fleisch und Milch, Abstand nehmen müssen und auf diesen an sich üblichen Lebensmittelprodukten in Geschmack und Organoleptik möglichst nahekommende pflanzlich basierte Lebensmittel angewiesen sind.

Eine hinsichtlich ihrer Eignung zur Herstellung von Fleisch- und Milchersatz-Produkten schon seit langem genutzte Pflanze ist Soja. Soja stellt eine hochwertige Eiweißquelle dar, besitzt einen relativ großen Anteil an mehrfach ungesättigten Fettsäuren und hat neben anderen günstigen physiologischen Eigenschaften den Vorteil, dass sie praktisch cholesterinfrei ist.

Verarbeitete Sojaprodukte haben weiters gute nutritive Eigenschaften und können funktionelle Aufgaben in Lebensmitteln übernehmen. So stellt z. B. Sojamilch ein für die Herstellung von Soja-Getränken, Kaffee-Obers, Dessert-Cremen und -Schäumen durchaus geeignetes, von Personen mit Lactose-Intoleranz akzeptiertes und leicht verträgliches Ersatzprodukt für tierische Milch dar.

Es ist schon eine größere Anzahl von Verfahren zur Herstellung bzw. Gewinnung von Sojamilch bekannt geworden. Bei einem dieser Verfahren werden die Sojabohnen nach eventuellem Einweichen mit kaltem oder heißem Wasser vermahlen, wonach die Sojamilch abgetrennt wird und nachher beispielsweise homogenisiert, pasteurisiert oder hitze-sterilisiert werden kann.

Ein wesentlicher Nachteil der Sojamilch besteht allerdings in deren zwar in Asien durchaus geschätztem, von Europäern jedoch nicht voll akzeptiertem, individuell verschieden als bohnig, grasig oder bitter bezeichnetem (Fehl-)Geschmack. Weiters kann die Sojabohne in Europa nicht so ökonomisch gewonnen werden wie beispielsweise in Südamerika. Der größte Teil des Rohstoffes kommt daher aus Übersee. Für ein täglich zu konsumierendes Lebensmittel ist diese Tatsache aus Sicht des Konsumenten nicht von Vorteil.

Die Ergebnisse verschiedener Versuche, diesen Fehl-Geschmack zu eliminieren, sind bis heute nicht überzeugend gewesen.

Es wurde daher versucht, die Sojamilch durch eine andere bekömmlichere Pflanzenmilch zu ersetzen, und es wurde schon vor einiger Zeit gefunden, dass sich aus fein gemahlenen Hanfsamen durch Extraktion mit Wasser eine im Geschmack wesentlich angenehmere Pflanzen-Milch gewinnen lässt, deren Nachteil allerdings darin besteht, dass sie schon kurze Zeit nach ihrer Gewinnung ein unansehnliches Aussehen annimmt, es kommt zu einem "Vergrauen" der anfänglich durchaus appetitlich weiß und tatsächlich milchartig aussehenden Hanfmilch. Was den Stand der Technik betrifft, so sind unter anderem schon Verfahren zur Herstellung von Pralinen, von Backwaren, von Bier und nicht zuletzt von Milch und Tofu auf Basis der Samen des Hanfs beschrieben und bekannt geworden, wozu nur beispielsweise auf die DE 197 46 830 C1, DE 199 54153 A1, DE 196 31 460 A1 und DE 196 50 018 A1 sowie auf die unten näher behandelte RU 2185069 C2 sowie DE 198 33 567 C1 verwiesen sei.

Im wesentlichen ist es aus dem Stand der Technik bekannt, dass Hanfmilch, selbstverständlich jeweils nach entsprechender Adaption auf die doch unterschiedlichen Eigenschaften der Ausgangsstoffe auf Grund der Verschiedenartigkeit der Böden für den Hanfbau, Seehöhe und Lage der Anbauflächen sowie durch unterschiedliche Wetterbedingungen, in wesentlichen Zügen ähnlich zu Sojamilch hergestellt werden kann, wobei der größte Unterschied zur Verarbeitung von Soja darin besteht, dass das aufgrund seiner Inhaltsstoffe als Lebensmittel besonders wertvolle, jedoch an sich schon kleine Hanfsamenkorn von einer relativ harten Schale umgeben ist, die vor einer Extraktion der Inhaltsstoffe aus dem eigentlichen Korn zuerst einmal gebrochen werden muss.

So beginnt die Gewinnung von Hanfmilch aus Hanfsamen überwiegend mit einem vorherigen Entschälen der Samen, womit das Problem der Bitterstoffe nicht auftritt, Einweichen bzw. -maischen der geschälten Samen in Wasser, Nass-Mahlung, z.B. mittels Cutter, wonach der Aufschluss der gebrochenen Samen bei höheren Temperaturen und eine Abtrennung der die gebrochenen Schalen und hitzegefälltes Protein umfassenden Feststoffanteile von der Hanfmilch erfolgt, welche dann individuell noch weiter behandelt werden kann.

Aus den bisher bekannten Veröffentlichungen wird klar, dass sich ganz offenbar noch niemand mit dem oben erwähnten und die Akzeptanz von Hanfmilch wesentlich beeinträchtigenden Problem der Vergrauung der Hanfmilch näher beschäftigt hat, und es sind bis jetzt keine Veröffentlichungen bekannt geworden, welche etwa Vorschläge zur Verhinderung der Vergrauung enthalten.

So ist aus der RU 2185069 C2 eine Weiterentwicklung der Hanfmilch-Gewinnung bekannt geworden, welche darin besteht, dass ganze Hanfsamen bis zum Auftreten der Keime in der Größe von 1 bis 2 mm keimen gelassen werden, wobei diese Keimgröße das wesentliche Kriterium ist und nicht die Zeitdauer des Einweichens und Keimens. Dann werden die angekeimten Samen vermahlen, danach erfolgt eine Extraktion in heißem Wasser bei einem "Hydromodul" von 1,3 bis 1,5 und eine Abtrennung der Hanfmilch von den Samen-Feststoffrückständen. In allen drei Beispielen dieser RU-C2 wird ausgeführt, dass eine Pflanzenmilch von milchig-weißer Farbe mit einem leicht gräulichen Stich erhalten wird.

Die DE 198 33 567 C1 beschreibt ein Verfahren zur Herstellung von Lebensmitteln aus Hanf, insbesondere von Tofu und Hanfmilch, welches darin besteht, dass eine proteinreiche Hanfsorte eingesetzt wird, dass die Hanfsamen unter Kühlung gequollen werden, unter Kühlung aufgebrochen werden und schließlich eine Abtrennung der Hanfmilch von den Feststoff-Anteilen erfolgt, welche durch thermische Denaturierung zu Hanf-Tofu gefällt wird. Die Quelltemperatur ist dort mit 8 bis 10°C, die Quellzeit mit 20 Stunden und die Aufbrech-Temperatur mit 1°C angegeben. Das Aufbrechen der Samen erfolgt in einem Kühlkutter. Der Schwerpunkt der gesamten DE-C1 liegt auf dem Mahlen der Hanfsamen bei niederen Temperaturen. Es wird dort die Hanfmilch als neues Produkt bezeichnet, von dem festgestellt wird, es sei weiß und ähnele der Kuhmilch. Da die gesamte Schrift schwerpunktmäßig auf Hanf-Tofu gerichtet ist und die Hanfmilch ganz offensichtlich nur ein Zwischenprodukt auf dem Weg zum Tofu bildete, welches nach Gewinnung in kurzer Zeit weiterverarbeitet wurde, konnte das Problem der "Vergrauung" und dessen Lösung keine Rolle spielen und ist daher in dieser Patentschrift nicht angesprochen.

Die vorliegende Erfindung hat sich nun die Aufgabe gestellt, ein Verfahren zur Herstellung von in Farbe und Konsistenz durch den Konsumenten voll akzeptierter Hanfmilch zu entwickeln, bei dem einerseits die an sich kostengünstigeren ungeschälten Hanfsamen - das Preisverhältnis zwischen geschälten und ungeschälten Hanfsamen liegt bei etwa 5 : 1 - direkt und ohne gesonderte Vorbehandlung zum Einsatz kommen können.

Eingehende Versuche und die dabei gewonnenen Erfahrungen haben gezeigt, dass bei kaltem Vermahlen und Aufschluss bzw. Extraktion von Hanfsamen, wie dies dem Stand der Technik entspricht, nur relativ geringe Ausbeuten erzielt werden und bei Einsatz von ungeschälten Hanfsamen eine besonders starke Vergrauung der Milch durch die Wirkung rohstoffeigener Enzyme, wie z.B. von Polyphenoloxidasen, eintritt. Solange das Produkt Hanfmilch mit diesem, vom Konsumenten eher als abstoßend empfundenen Makel behaftet ist, konnte bislang an eine Markteinführung im größeren Rahmen nicht gedacht werden.

Im Zuge vertiefender Untersuchungen wurde gefunden, dass eine Mindesttemperatur von 80°C entweder gleich beim Einmaischen der vorher zerkleinerten bzw. zermahlenen Hanfsamen bzw. beim Nassvermahlen noch ganzer Hanfsamen oder zumindest bei der nachfolgenden Extraktion eingehalten werden muss, um die genannten Enzyme zu inaktivieren und auf diese Weise zu einer frischen Hanfmilch mit verbessertem Geschmack zu gelangen, welche keinerlei Tendenz zur "Vergrauung" zeigt und ihre üblicher Kuhmilch ähnliche weiße Farbe auch noch Stunden nach ihrer Gewinnung beibehält.

Weiters hat es sich gezeigt, dass bei einer nachfolgenden Pasteurisation oder Sterilisation von Hanfmilch, die durch Einmaischen, Vermahlen und/oder Extraktion bei Temperaturen unter 80°C hergestellt worden ist, sich ein grießiger Niederschlag bildet, der von Konsumenten in einem solchen Getränk nicht akzeptiert wird. Es konnte festgestellt werden, dass es sich hierbei um koaguliertes Protein handelt. Für die Herstellung einer stabilen und vertriebsfähigen Hanfmilch ist jedoch - insbesondere auch aus hygienischen Gründen - zumindest eine Pasteurisation unumgänglich.

Wird nun das Einmaischen und die Extraktion bei Temperaturen von 80°C und darüber durchgeführt, werden die koagulierbaren Proteine von vornherein gar nicht extrahiert bzw. fallen sie schon bei diesen Verfahrensschritten aus, und werden bei der nachfolgenden Abtrennung der Feststoffe (Okaratrennung) mit abgetrennt. Mittels der Hochtemperatur-Vermahlung und/oder -Extraktion gelangt man zu einer stabilen Milch, die pasteurisiert werden kann, ohne dass sich ein wie oben beschriebener grießartiger Niederschlag bildet.

Weiters wurde gefunden, dass die Temperatur beim Einmaischen und bei der Extraktion zwar einerseits mindestens 80°C betragen, jedoch nicht über 90°C hinausgehen soll. Ein Grund dafür liegt darin, dass bei Temperaturen von über 90°C der Proteinanteil in der Hanfmilch nicht mehr zunimmt, sondern wieder geringer wird. Ein weiterer Grund ist darin zu suchen, dass die Hanfmilch bei Extraktionstemperaturen über 90°C und längeren Extraktionszeiten, insbesondere beim eben erwünschten Einsatz ungeschälter Hanfsamen einen inakzeptabel, bitteren Geschmack annimmt. Hohe Extraktionstemperaturen und längere Extraktionszeiten wären aber für eine hohe Ausbeute wünschenswert.

Die vorliegende Erfindung betrifft somit ein neues Verfahren zur Herstellung bzw. Gewinnung von Hanfmilch, in dessen Verlauf Hanfsamen mit Wasser eingemaischt und zerkleinert bzw. vermahlen werden, wobei im Verlaufe des Verfahrens die Extraktion der Samen mittels erhitzten Wassers erfolgt und die erhaltene Roh-Hanfmilch von den Feststofffanteilen der Hanfsamen getrennt wird.

Das neue Verfahren dadurch gekennzeichnet, dass
- für den Erhalt von unverfärbt bleibender, nicht vergrauender, von bitterem Geschmack freier, pasteurisier- und sterilisierfähiger Hanfmilch
- nach einem fünf- bis zwölfstündigen Einweichen der Hanfsamen bei Temperaturen im Bereich von 5 bis 35°C in Wasser und einem Waschen die derart eingeweichten bzw. eingemaischten Hanfsamen entweder
   - a) unter Erhitzen auf eine Temperatur im Bereich von 80 bis 90°C zerkleinert bzw. vermahlen werden, wonach die Extraktion bei Temperaturen von unter 80°C erfolgt, oder
   - b) zuerst bei Temperaturen von 0°C bis maximal 80°C zerkleinert bzw. vermahlen werden und danach einer Heiß- bzw. Heißwasser-Aufschließung bzw. -Extraktion bei Temperaturen im Bereich von 80 bis 90°C unterworfen werden,
- wonach die Auftrennung in im Wesentlichen Protein-Anteile und Hanfsamenschalen-Partikel enthaltendes Okara und Roh-Hanfmilch erfolgt,
- welche entweder direkt im frischen Zustand oder nach einer Weiterbehandlung, Pasteurisierung, Hitzesterilisierung od. dgl. dem Konsum zuführbar ist.

Bei strikter Einhaltung einer vorsichtigen Fahrweise bei der Herstellung von Hanfmilch ohne auch nur kurzzeitige und/oder knappe Über- und Unterschreitung des Rahmens des oben erläuterten, für die spätere Akzeptanz von Hanfmilch durch den Konsumenten entscheidenden Temperaturfensters beim Mahlen und/oder beim Heißwasser-Aufschluss gelangt man in überraschender Weise zu einer farbstabilen, nicht bitteren, pasteurisier- oder sterilisierfähigen Hanfmilch.

Was das bekannte Vergrauen der bisher bekannten bzw. nach bisher bekannten Verfahren hergestellten Hanfmilch oft schon kurze Zeit nach deren Herstellung betrifft, so wird diese Verfärbung vornehmlich durch die in den Schalen enthaltenen und durch deren Brechen beim Mahlen frei werdenden Polyvinyloxidasen hervorgerufen. Es ist davon auszugehen, dass bei einer ganz gezielten Verfahrensführung gemäß der Erfindung unter Einhaltung bzw. Überschreitung des unteren Randes des genannten Temperaturfensters, nämlich von zumindest 80°C, eine sichere Desaktivierung der genannten Enzyme erreicht wird.

Für die angestrebte Akzeptanz der Hanfmilch durch den Konsumenten ist es bei deren Gewinnung aus ungeschälten Hanfsamen weiters wichtig, dass eben auch die Obergrenze des Temperatur-Intervalls nicht überschritten werden darf, womit die Entstehung der oben kurz erwähnte, vom Konsumenten - in gleicher Weise wie die "Vergrauung" - nicht geschätzte, "grießige" Konsistenz gezielt hintangehalten bleibt, welche auf eine Art Koagulation der in der Hanfmilch verbleibenden Anteile der dort solartig gelöst vorliegenden Proteine zurückzuführen ist.

An dieser Stelle soll zum ernährungs-physiologischen Wert von Hanfmilch kurz ausgeführt werden, dass derselbe vor allem darin liegt, dass in der Hanfmilch - ganz im Unterschied zur Sojamilch - alle acht essentiellen, also für den Menschen wichtigen, und von demselben nicht produzierbaren Aminosäuren enthalten sind, weiters, dass die in ihr enthaltenen Proteine bzw. Eiweiße besonders humanverträglich sind und dass sie bei ansonsten schon hohem Anteil an ungesättigten Fettsäuren einen beachtlichen Gehalt an besonders wertvoller γ-3-Linolensäure in ihrem Fettgehalt aufweist.

So besteht der Fett- bzw. Ölanteil des Hanfsamens zu insgesamt etwa 10 % aus gesättigten Fettsäuren, zu etwa 10 bis 15 % aus Ölsäure, zu 50 bis 70 % aus Linolsäure, zu 15 bis 25 % aus Linolensäure und bis zu 5 % aus γ-Linolensäure, wobei das Verhältnis von Linolsäure zu Linolensäuren von 3: 1 dem Human-Bedarfs-Verhältnis besonders nahe kommt.

Gerade γ-Linolensäuren und octa-Tetraensäure mit bis zu 1 % Anteil im Hanföl sind auch vom pharmakologischen Standpunkt aus von Interesse, insbesondere für die Behandlung von Neurodermitis, Rheuma, Arthritis, chronischen Entzündungen, diabetischer Neuropathie und zur Senkung des Cholesterinspiegels.

Ein weiterer Vorteil von Hanfmilch liegt darin, dass die in ihr enthaltenen acht, vom menschlichen Körper nicht biosynthetisierbaren "essentiellen" Aminosäuren in leicht verdaulicher Form zusammen mit den restlichen Aminosäuren dem diesbezüglichen "Bedarfsmuster" des menschlichen Körpers besonders gut entsprechen.

Somit kann Hanfmilch zur Ergänzung des Proteinangebots einen äußerst nützlichen Beitrag leisten und stellt somit eine - jedenfalls von der Qualität her - als hervorragend zu bezeichnende Proteinquelle dar.

Insgesamt bleibt weiters festzuhalten, dass gefunden wurde, dass - abgesehen von der Kostenfrage - im Hinblick auf Eiweiß, Fett und Trockenmasse dem erfindungsgemäß vorgesehenen Einsatz von ungeschälten Hanfsamen zur Herstellung von Hanfmilch, jenem von geschälten Samen der Vorzug zu geben ist.

Der wichtigste Fortschritt besteht darin, dass es durch das neue Verfahren gelungen ist, der bisher nicht beherrschten Tendenz zur "Vergrauung" und gleichzeitig auch des Problems der "Grießigkeit" der Hanfmilch auf einfache Weise durch Steuerung der Temperatur beim Vermahlen und/oder Heiß-Extrahieren Herr zu werden, sodass dem Konsumenten ein nicht nur problemlos akzeptierbares, sondern durchaus attraktives, der Sojamilch weit überlegenes, pflanzen-basiertes Milchprodukt zur Verfügung gestellt werden kann, dessen an sich gegenüber dem bohnigen Geschmack von Sojamilch schon immer als wesentlich angenehmer empfundener, leicht nussartiger Geschmack besonders verfeinert ist.

Bezüglich der Hanfmilch-Ausbeute ist auszuführen, dass pro 20 bis 25 dag eingesetzter Hanfsamen 1 L Hanfmilch erhalten wird, wobei der wesentliche Vorteil der erfindungsgemäß erhältlichen Hanfmilch in ihrer Ähnlichkeit zu Kuhmilch liegt.

Zum Einmaischen der Hanfsamen ist es im Sinne der Gewinnung eines hochwertigen Hanfmittelproduktes günstig, übliches Trink- oder Leitungswasser für das Einmaischen einzusetzen.

Für die Gewinnung hochqualitativer Hanfmilch ist es vorteilhaft, bei Heiß-Extraktion die aus dem **Anspruch** 2 zu entnehmenden Zeiten einzuhalten, wobei die dort genannte untere Zeitgrenze von 1,5 min mit der oberen Aufschluss-Temperaturgrenze korreliert und vice versa.

Es wurde gefunden, dass sich die Stabilität der Hanfmilch gegenüber der Vergrauung und die Organoleptik der Hanfmilch noch verbessern lassen, wenn die Vermahlung und/oder die Heiß-Aufschluss bzw. die Heiß-Extraktion der vermahlenen Hanfsamen bei Temperaturen von zumindest 82°C vorgenommen wird, wie dem **Anspruch** 3 zu entnehmen, wobei die schon oben genannte Obergrenze von 90°C einzuhalten bleibt.

Dem **Anspruch** 4 sind im Hinblick auf die Farbstabilität und den Geschmack der Hanfmilch besonders günstige Herstellungs-Parameter zu entnehmen.

Im Rahmen der eingehenden Untersuchungen zur Verhinderung der Vergrauung wurde gefunden, dass eine weitere Qualitätssteigerung insbesondere auch hinsichtlich des Geschmacks erzielt werden kann, wenn an die oben beschriebene Heißvermahlung und/oder Heißwasser-Extraktion der Hanfsamen- und nach einsprechender Abkühlung der Maische eine Kaltextraktions-Stufe angeschlossen wird, wie sie im **Anspruch** 5 beschrieben ist. Durch diese Kaltextraktion kommt es zur Steigerung des Feststoffgehaltes, also des Anteils an wertvollem Fett, Eiweiß und Mineralstoffen, was dazu führt, dass die auf diese Weise erhaltene Hanfmilch in ihrer Konsistenz und Optik einer Kuhmilch mit üblichem Fettgehalt besonders ähnlich ist.

Der **Anspruch** 6 gibt besonders günstige Bedingungen für den Erhalt hochwertiger, farbstabiler Hanfmilch wieder.

Dem **Anspruch** 7 ist ein für die Erreichung hoher Effizienz bezüglich Ausbeute und Qualität der gewonnenen Hanfmilch vorteilhafterweise einzuhaltender Gesamt-Verfahrenslauf zu entnehmen.

Was die Qualität des für die Quellung sowie für die Kalt- und Heiß-Extraktion der Hanfsamen einzusetzenden Wassers betrifft, so gibt darüber der **Anspruch** 8 näher Auskunft, ebenso wie bezüglich der Möglichkeit eines Rastenlassens der zu Beginn des Hanfmilch-Herstellungsprozesses vorgesehenen Hanfsamen-Maische, was den Mahlvorgang erleichtert.

Der **Anspruch** 9 enthält Angaben bezüglich der bei Zerkleinerung der Hanfsamen auf die für die späteren Behandlungsschritte und für die Ausbeute an Hanfmilch günstigerweise anzustrebenden Korngrößenbereiche.

Nicht zuletzt sei erwähnt, dass eine ganz leichte Ankeimung der Hanfsamen beim Einmaischen, wie im **Anspruch** 10 geoffenbart, insbesondere für das Mahlen eine Erleichterung bringen und weiters den Wohlgeschmack und die sensorische Qualität der Hanfmilch weiter heben kann.

Da die zur Gewinnung der Hanfmilch aus der Maische vorgesehene Auftrennung von, bevorzugt an Wiederkäuer verfütterbarem, Okara - vielleicht treffender als "Hanfara" zu bezeichnen - und Roh-Hanfmilch nicht ganz einfach ist, kann es günstig sein, bei dieser Auftrennung zuerst einen Großteil der Aufschlussmasse zur Sedimentation zu bringen und somit einen Großteil der den Überstand bildenden Hanfmilch davon abzutrennen und danach die weitere Abtrennung der restlichen Hanfmilch mittels Dekanter oder Zentrifuge vorzunehmen.

An sich kann es günstig sein, die nach dem neuen Verfahren erhaltene Roh-Hanfmilch zu standardisieren, also insbesondere durch entsprechende Zugaben an Wasser auf Trockensubstanz-Gehalte von 4 bis 6 Gew-%, bevorzugt von etwa 5 %, zu bringen.

Schließlich kann eine Homogenisierung der Hanfmilch, gegebenenfalls unter Zugabe eines Emulgators, vorzugsweise Lecithin, z.B. in einem Kegel-Homogenisator, bei einem Druck von 250 bis 350 bar für eine Zeitdauer von 3 bis 8 min den Erfolg des Verfahrens in günstiger Weise beeinflussen.

Anhand der folgenden Beispiele wird die Erfindung näher erläutert:

### Beispiel 1:

2,5 kg vorgequollene und gewaschene, ungeschälte Hanfsamen werden mit 10 L Wasser mittels Nassmühle auf eine mittlere Feinheit von 0,1 bis 0,2 mm fein vermahlen und eingemaischt.

Dann wird die Maische mittels Röhrenerhitzer auf 85°C erhitzt und 15 min lang auf dieser Temperatur gehalten. Danach wird die Maische innerhalb kurzer Zeit auf 2°C abgekühlt, anschließend mit einem Dekanter in die aus Hanfsamen-Schalen, Hanfsamen-Feststoffen, insbesondere gefälltes Protein bestehende feste und die von der Hanfmilch gebildete flüssige Phase aufgetrennt.

Es wird eine homogene, angenehm nussig schmeckende, milchig-weiße, selbst nach drei-stündigem Stehen in einem offenen Gefäß keine Tendenz einer Änderung der ansprechenden weißen Färbung zu einem Grauton hin zeigende Hanfmilch erhalten. Es kann diese Roh-Hanfmilch selbstverständlich günstigerweise relativ rasch nach ihrer Gewinnung pasteurisiert oder über 100°C hocherhitzt und in eine handelsübliche Verpackung gefüllt werden. Durch Einsatz eines handelsüblichen Emulgators kann einer eventuellen Neigung der Hanfmilch zur Entmischung entgegengewirkt werden.

### Beispiel 2:

2 kg ungeschälte Hanfsamen wurden in 3 L kontinuierlich von 21 auf 30°C erwärmtem Wasser 10 h lang gequollen und anschließend gewaschen; die Keimlinge beginnen gerade merkbar die Samenschale zu durchbrechen. Danach werden die Hanfsamen bei 5°C mit 10 L Wasser vermahlen, wonach die Maische auf 83°C erhitzt wird. Nach drei-minütiger Heißhaltezeit bei 83°C wird die Maische auf innerhalb von etwa 1 h auf 5°C und dann innerhalb von weiteren 10 min unter ständigem Rühren auf 0°C abgekühlt. Nach 5 h Kalt-Extraktion bei 0°C wird die Maische mittels Dekanter in die flüssige Hanfmilch und in die feste Okara- bzw. "Hanfara"-Phase aufgetrennt.

Es werden 10 L homogene, tatsächlich kuhmilchähnliche, deutlich und angenehm nach Nuss schmeckende Hanfmilch-Emulsion mit 3,2 % Fettgehalt erhalten, welche frisch konsumiert oder aber pasteurisiert bzw. ultrahocherhitzt werden kann.

Die nach der Kalt-Extraktion und Abtrennung von den Feststoffanteilen erhaltene, frische Hanfmilch zeigte selbst nach fünf-stündigem Stehen im offenen Gefäß bei Raumtemperatur keine den Wohlgeschmack und das Aussehen beeinträchtigende Veränderung. Es trat also keinerlei "Vergrauung" ein.

### Beispiel 3:

2 kg ungeschälte Hanfsamen wurden in 3 L Wasser 8 h lang bei 19 bis 21 °C gequollen. Danach wurden die Hanfsamen mit 10 L Wasser bei einer Temperatur von 83°C in einer Nassmühle auf eine mittlere Partikel-Größe von 0,1 bis 0,25 mm vermahlen.

Danach wurde die vermahlene Maische auf Raumtemperatur abgekühlt und 5 h lang rasten und sedimentieren gelassen, wonach die Abtrennung der Hanfmilch von dem Okara bzw. "Hanfara" erfolgte.

Die so gewonnene Hanfmilch (Ausbeute: 10 L Hanfmilch pro 2 kg Hanfsamen) zeichnete sich durch angenehmen nussartigen Geschmack aus und zeigte keinerlei Tendenz zur Vergrauung.

### Beispiel 4:

Es wurde in gleicher Weise wie gemäß Beispiel 3 vorgegangen, allerdings wurde während einer fünf-stündigen Rast- bzw. Extraktionsphase die Temperatur auf 3 bis 5°C gehalten.

Die auf diese Weise erhaltene Hanfmilch wies einen intensiv nussigen Geschmack auf; eine Tendenz zur Vergrauung war selbst nach Ablauf von 5 h bei Raumtemperatur nicht zu bemerken.

## Patentansprüche

1. Verfahren zur Herstellung von Hanfmilch, in dessen Verlauf Hanfsamen mit Wasser eingemaischt und zerkleinert bzw. vermahlen werden, wobei im Verlaufe des Verfahrens die Extraktion der Samen mittels erhitzten Wassers erfolgt und die erhaltene Roh-Hanfmilch von den Feststoffanteilen der Hanfsamen getrennt wird,
**dadurch gekennzeichnet, dass**
- für den Erhalt von unverfärbt bleibender, nicht vergrauender, von bitterem Geschmack freier, pasteurisier- und sterilisierfähiger Hanfmilch
- nach einem fünf- bis zwölfstündigen Einweichen der Hanfsamen bei Temperaturen im Bereich von 5 bis 35°C in Wasser und einem Waschen die derart eingeweichten bzw. eingemaischten Hanfsamen entweder
- a) unter Erhitzen auf eine Temperatur im Bereich von 80 bis 90°C zerkleinert bzw. vermahlen werden, wonach die Extraktion bei Temperaturen von unter 80°C erfolgt, oder
- b) zuerst bei Temperaturen von 0°C bis maximal 80°C zerkleinert bzw. vermahlen werden und danach einer Heiß- bzw. Heißwasser-Aufschließung bzw. -Extraktion bei Temperaturen im Bereich von 80 bis 90°C unterworfen werden,
- wonach die Auftrennung in Protein-Anteile und Hanfsamenschalen-Partikel enthaltendes Okara und Roh-Hanfmilch erfolgt,
- welche entweder direkt im frischen Zustand oder nach einer Weiterbehandlung, Pasteurisierung, Hitzesterilisierung od. dgl. dem Konsum zuführbar ist.

2. Verfahren nach Anspruch 1, **dadurch gekennzeichnet, dass** die Heiß-Aufschließung bzw. -Extraktion der vermahlenen Hanfsamen während einer Zeitdauer von 1,5 bis 15 min vorgenommen wird.

3. Verfahren nach Anspruch 1 oder 2, **dadurch gekennzeichnet, dass** die eingeweichten bzw. eingemaischten Hanfsamen entweder
- a) unter Erhitzen auf eine Temperatur von zumindest 82°C zerkleinert bzw. vermahlen werden, oder
- b) zuerst bei Temperaturen im Bereich von unterhalb 80°C, bevorzugt bei 40 bis 50°C, zerkleinert bzw. vermahlen werden und danach der Heiß-Aufschließung bzw. -Extraktion bei einer Temperatur von zumindest 82°C unterworfen werden.

4. Verfahren nach einem der Ansprüche 1 bis 3, **dadurch gekennzeichnet, dass** die Heiß-Aufschließung bzw. -Extraktion gemäß b) bei einer Temperatur von 82 bis 85°C, vorzugsweise von 82,5°C, während einer Zeitdauer von 3 bis 8 min, vorzugsweise von 4 bis 6 min, vorgenommen wird.

5. Verfahren nach einem der Ansprüche 1 bis 4, **dadurch gekennzeichnet, dass** die nach der Heiß-Vermahlung gemäß a) oder nach Vermahlung und anschließender Heiß-Aufschließung bzw. -Extraktion gemäß b) und nach Abkühlung der dabei erhaltenen Maische aus vermahlenen Hanfsamenkörnern, Hanfsamenschalen und Wasser dieselbe über eine Zeitdauer von 30 bis 4 h einer Kalt-Nachextraktion bei einer Temperatur im Bereich von 0 bis maximal 10°C unterworfen wird.

6. Verfahren nach einem der Ansprüche 1 bis 5, **dadurch gekennzeichnet, dass** die Kalt-Nachextraktion unter Rühren bei Temperaturen im Bereich zwischen 2 und 6°C, vorzugsweise bei 4°C, während einer Zeitdauer von 10 bis 15 h, vorzugsweise von 12 h, vorgenommen wird.

7. Verfahren nach einem der Ansprüche 1 bis 6, **dadurch gekennzeichnet, dass** - ausgehend von ungeschälten Hanfsamen als Rohstoff - eine durch Nasszerkleinerung in Wasser mit einer Temperatur von zumindest 80°C erhaltene, 15 bis 25 % gemahlene Hanfsamen enthaltende Rohmaische bei einer Temperatur im Bereich zwischen 80 und 90°C innerhalb eines Zeitraumes von 15 bis 1,5 min einem Aufschließvorgang bzw. einer Heißextraktion und anschließend - nach Abkühlen - über eine Zeitdauer zwischen 30 und 4 h bei Temperaturen im Bereich zwischen 0 und 10°C einer Kalt-Nachextraktion unterworfen wird, wonach eine Auftrennung in im Wesentlichen hitzefällbare Protein-Anteile und Schalenpartikel enthaltendes Okara und in Roh-Hanfmilch erfolgt, welche dann entweder frisch konsumierbar oder aber nach Homogenisierung, eventuell unter Zugabe eines Emulgators, und, bevorzugtenfalls nach Abfüllung in für den Konsum vorgesehene Gebinde, unter Erhitzen auf 60 bis 93°C pasteurisiert oder aber bei Temperaturen von über 100°C hitzesterilisiert wird.

8. Verfahren nach einem der Ansprüche 1 bis 7, **dadurch gekennzeichnet, dass** beim Einweichen 10 bis 45 %, vorzugsweise 15 bis 25 Gew-%, ungeschälte Hanfsamen mit 90 bis 65, vorzugsweise mit 85 bis 75 %, Wasser mit TrinkwasserQualität versetzt werden und die Einweichmasse vor dem Zerkleinern bzw. Mahlen 0,5 bis 5 h lang bei Umgebungstemperatur rasten gelassen wird.

9. Verfahren nach einem der Ansprüche 1 bis 7, **dadurch gekennzeichnet, dass** die eingeweichten Hanfsamen mittels Cutter oder Kolloidmühle, bei niedrigen Temperaturen, insbesondere bei Temperaturen zwischen 0 und 10°C, zu Hanfsamenkorn- und Hanfsamenschalen-Partikeln mit Korngrößen im Bereich von 0,05 bis 0,5 mm zerkleinert bzw. vermahlen werden.

10. Verfahren nach einem der Ansprüche 1 bis 8, **dadurch gekennzeichnet, dass** die Zeitdauer des Einweichens bzw. Einmaischens der Hanfsamen mit Wasser verlängert wird, bis der mit freiem Auge erkennbare Beginn der Keimung der Hanfsamen erreicht ist.

## Claims

1. A method for producing hemp milk, in the course of which hempseeds are mashed with water and comminuted or ground, wherein an extraction of the seeds by means of heated water is effected in the course of the method, and the raw milk obtained is separated from the solid proportion of the hempseeds,
**characterised in that**
- in order to obtain hemp milk able to be pasteurised and sterilised which remains undiscoloured, does not become grey and is free of a bitter flavour,
- after soaking the hempseeds for five to twelve hours at a temperature in the range of 5 to 35°C in water and after washing, the soaked or mashed hempseeds are either
- a) comminuted or ground under heating up to a temperature in the range of 80 to 90°C, after which extraction is effected at a temperature of below 80°C or
- b) are first comminuted or ground at a temperature of 0°C up to 80°C in maximum,
whereafter they are subjected to hot decomposition or hot water extraction at a temperature in the range of 80° to 90°C,
- after which separation is effected into okara, which contains protein proportions and particles of hempseed shells, and raw hemp milk,
- which may either be supplied directly in fresh condition to consuming or after further processing, pasteurising, hot sterilising or the like.

2. Method as claimed in claim 1, **characterised in that** hot decomposition or extraction of ground hempseeds is effected during a period of time of 1.5 to 15 min.

3. Method as claimed in claim 1 or 2, **characterised in that** the soaked and mashed hempseeds are either
- a) comminuted or ground under heating to a temperature of at least 82°C, or
- b) are first comminuted or ground at a temperature in the range of below 80°C, preferably at 40 to 50°C, whereafter they are subjected to hot decomposition or extraction at a temperature of at least 82C.

4. Method as claimed in any of claims 1 to 3, **characterised in that** hot decomposition or extraction according to b) is effected at a temperature of 82 to 85°C, preferably at 82.5°C, for a period of time of 3 to 8 min., preferably of 4 to 6 min.

5. Method as claimed in any of claims 1 to 4, **characterised in that** the mash obtained after hot grinding according to a) or after grinding and subsequent hot decomposition or extraction according to b) and after cooling the mash obtained of ground hempseed grains, hemp shells and water is subjected to cold after-extraction during a period of time of 30 to 4 hours at a temperature in the range of 0 up to 10°C in maximum.

6. Method as claimed in any of claims 1 to 5, **characterised in that** the cold after-extraction is effected under agitation at a temperature in the range between 2 and 6°C, preferably at 4°C, during a period of time of 10 to 15 hours, preferably of 12 hours.

7. Method as claimed in any of claims 1 to 6, **characterised in that** starting from unshelled hempseeds as a raw material, a raw mash, obtained by wet comminution in water at a temperature of at least 80°C and containing 15 to 25% of ground hempseeds, is subjected to a decomposition process or a hot extraction at a temperature in the range between 80 and 90°C within a period of time of 15 to 1.5 min., and subsequently, after cooling, to a cold after-extraction for a period of time between 30 and 4 hours at a temperature in the range between 0 and 10°C, after which a separation is effected into okara, which contains substantially heat precipitating protein proportions and shell particles, and into raw hemp milk, which then is either consumable in fresh condition or after homogenising, optionally adding an emulsifier, and, preferably, after filling it into container provided for consuming, under heating to 60 to 93°C is pasteurised or is heat sterilised at a temperature of more than 100°C.

8. Method as claimed in any of claims 1 to 7, **characterised in that** during soaking 10 to 45 %, preferably 15 to 25 % by weight, of unshelled hempseeds are added to 90 to 65, preferably 85 to 75 %, of water of drinking water quality, and that the soaking mass is left at rest before being comminuted or ground at ambient temperature for 0.5 to 5 hours.

9. Method as claimed in any of claims 1 to 7, **characterised in that** the soaked hempseeds are comminuted or ground by a cutter or a colloid mill to hempseed grains and hempseed shell particles having a grain size in the range of 0.05 to 0.5 mm at a low temperature, particularly at a temperature between 0 and 10°C.

10. Method as claimed in any of claims 1 to 8, **characterised in that** the period of time of soaking or mashing the hempseeds with water is prolonged up to the moment when the begin of germinating of the hempseeds can be recognised with the naked eye.

## Revendications

1. Procédé pour produire du lait de chanvre, au cours duquel on malaxe des graines de chanvre avec de l'eau et les concasse ou on les moud, une extraction des graines au moyens de l'eau chauffé étant fait au cours du procédé, et on sépare le lait cru de chanvre des portions de solides des graines de chanvre,
**caractérisé en ce, que**
- pour obtenir un lait de chanvre, qui n'est pas décoloré, ne grisonne pas et est sans goût amer, et peut être pasteurisé et stérilisé,
- après un trempage de cinq heures à douze heures des graines de chanvre dans l'eau à une température dans le domaine de 5 à 35°C, et après un lavage, on procède avec les graines de chanvre tellement trempées et malaxées, soit
- a) par un concassage ou une mouture en les chauffant à une température dans le domaine de 80 à 90°C, après quoi on procède avec une extraction à une température de moins de 80°C, soit
- b) premièrement par un concassage ou une mouture à une température de 0°C jusqu'à 80°C en maximum, après quoi on les soumet à une digestion à chaud ou à l'eau chaud ou à une extraction à une température dans le domaine de 80 à 90°C,
- après quoi on le sépare en okara, qui contient des portions de protéine et des particules de pelures de graines, et le lait brut de chanvre,
- qui peut être admis à la consommation soit directement en état frais, soit après un traitement ultérieur, une pasteurisation, une stérilisation à chaud ou pareil.

2. Procédé selon la revendication 1, **caractérisé en ce, que** la digestion ou l'extraction à chaud des graines de chanvre moulues est effectuée pendant une période de 1,5 à 15 min.

3. Procédé selon la revendication 1 ou 2, **caractérisé en ce, que** les graines de chanvre trempées et malaxées sont
- a) concassées ou moulues en les chauffant à une température d'au moins de 82°C, ou bien
- b) premièrement on les concasse ou les moud à une température dans le domaine de moins de 82°C, préférablement à 40 à 50°C, après quoi on les soumet à la digestion à chaud ou l'extraction à chaud à une température d'au moins de 82°C.

4. Procédé selon une quelconque des revendications 1 à 3, **caractérisé en ce, que** la digestion ou l'extraction à chaud selon b) est réalisée à une température de 82 à 85°C, préférablement de 82,5°C, pendant une période de 3 à 8 min., de préférence de 4 à 6 min.

5. Procédé selon une quelconque des revendications 1 à 4, **caractérisé en ce, que** la trempe obtenue après la mouture à chaud selon a) ou après la mouture et la digestion ou extraction à chaud suivante selon b), et après refroidissant la trempe des graines de chanvre, des pelures de graines et de l'eau est soumise à une extraction ultérieure à froid pendant une période de 30 à 4 heures à une température dans le domaine de 0 à 10°C en maximum.

6. Procédé selon une quelconque des revendications 1 à 5, **caractérisé en ce, que** l'extraction ultérieure à froid est effectuée en remuant à une température dans le domaine entre 2 et 6°C, préférablement à 4°C, pendant une période de 10 à 15 heures, de préférence de 12 heures.

7. Procédé selon une quelconque des revendications 1 à 6, **caractérisé en ce, qu'**en partant des graines de chanvre non décortiquées comme un matériau cru, une trempe crue, obtenue par une comminution humide dans l'eau à une température d'au moins 80°C, qui contient 15 à 25% de graines de chanvre moulues, est soumise à une procédure de digestion ou extraction à chaud à une température dans le domaine entre 80 et 90°C pendant une période de 15 à 1,5 min., et en suite, après un refroidissement, à une extraction à froid à une température dans le domaine entre 0 et 10°C pendant une période de 30 à 4 heures, après quoi on effectue une séparation en okara, qui contient des portions de protéine sensiblement capable à être précipitées par la chaleur et des particules de pelures de graines, et en le lait brut de chanvre, qui peut être consumé en frais ou bien, après une homogénéisation, le cas échéant en ajoutant un émulsifiant, et de préférence après l'avoir mis en emballage prévu pour la consommation, est pasteurisé en le chauffant à 60 à 93°C, ou stérilisé par la chaleur à une température plus grande que 100°C.

8. Procédé selon une quelconque des revendications 1 à 7, **caractérisé en ce, que**, pendant le trempage, 10 à 45 %, préférablement 15 à 25 % en poids, des graines de chanvre non décortiquées sont mélangées avec 90 à 65, préférablement avec 85 à 75 %, de l'eau de qualité potable, et que la masse trempée est permise de se reposer pendant 0,5 à 5 heures à la température ambiante avant de la comminution ou la mouture.

9. Procédé selon une quelconque des revendications 1 à 7, **caractérisé en ce, que** les graines de chanvre trempées sont cassées ou moulues au moins d'une coupeuse ou par un concasseur des colloïdes à des particules des graines de chanvre et des particules de pelures de graines ayant une granulométrie dans le domaine de 0,05 à 0,5 mm à une température basse, particulièrement à une température entre 0 et 10°C.

10. Procédé selon une quelconque des revendications 1 à 8, **caractérisé en ce, que** la période du trempage ou du malaxage des graines de chanvre avec de l'eau est prolongée jusqu'à ce que le commencement, reconnaissable à l'oeil nu, d'une germination des graines de chanvre soit atteint.
